# EUROPEAN PATENT APPLICATION

(11) **EP 2 960 769 A1**
(43) Date of publication of application: **30.12.2015**
(21) Application number: 14174048.0
(22) Date of filing: 26.06.2014
(51) Int. Cl.: G06F 3/0488, G06F 3/041, G06F 3/042

(54) **Method for providing data input using a tangible user interface**

(71) Applicant: Luxembourg Institute of Science and Technology (LIST), 4362 Esch-sur-Alzette (LU)
(72) Inventor: Tobias, Eric, 4026 Esch-sur-Alzette (LU); Maquil, Valérie, 1268 Luxembourg (LU); Latour, Thibaud, 6700 Arlon (BE)
(74) Representative: Lecomte & Partners

(57) **Abstract**

The invention provides a method and device for using a Tangible User Interface, TUI, to collaboratively provide data input at a computing device. The method enables the use of strong metaphors for associating multiple predetermined choices in reply to an input request formulated by a software application that is executed by a computing device to which the TUI provides an input interface.

## Description

### Technical field

The invention relates to the field of Tangible User Interfaces, TUI. Specifically, the invention relates to a method for providing data input at a computing device, wherein the data input is based on multiple values provided by one or more users using tangible user interface elements.

### Background of the invention

The area of human-computer interfaces relies heavily on the use of metaphors. For example, in the field of Graphical User Interfaces, GUI, symbols are commonly used as metaphors for implying the functionality of a user interface element. The use of efficient metaphors renders a user interface easy to manipulate and reduces the time and effort required by a user to get accustomed to using the interface. For example, a GUI button bearing the image of a floppy disk drive is instantly understood by a user as leading to the underlying software functionality of saving a document when the button is clicked using a pointing device. The stronger the user's association of the used metaphor with the associated functionality is, the more efficient an interface element will be.

Touch-based user interfaces have been able to propose several strong metaphors. As an example, the known feature of pinching fingers on an image displayed on a touch-sensitive display to zoom into the image, improves the usability of the software-implemented zoom functionality, as the user quickly associates the metaphor of the touch gesture to the underlying implied functionality.

Human beings are used to manipulating physical objects. Therefore, the potential of using a Tangible User Interface, TUI, which relies on the interaction of a user with physical objects to interact with software functionalities, has been identified as a good candidate for providing strong user interface metaphors. For a TUI to be usable in a natural way, using not only the user's visual capacities as traditional GUIs do, but also to convey information on a haptic and topological level, the interface needs to apply an efficient set of metaphors to imply functionality [1,2]. It is known that the application of metaphors works by designing the physical part of a Tangible User Interface, also called the tangible widgets, to imply a metaphorical context [3]. The implication of functionality relies mainly on the shape, color and texture of the objects that are used as tangible widgets. However, any physical stimulus may be used to imply functionality, such as for example smells or sounds. The metaphorical context allows for the application of well-known metaphors to be used, mapping the source domain (containing a familiar concept such as rotating a radial or shaping clay) into the target domain (altering the state of a digital object).

Recent research in TUIs [4,5,6] has focused on the use of table-top surface-like devices. A milestone which has triggered a lot of research and implementations using tabletop TUIs has been reacTable [7], implementing an electronic music instrument. The work spent on the reacTable has been refined and distilled into the reacTIVision framework [8]. The framework provides facilities for tracking, using a below-table infrared camera, objects on the table via fiducial markers attached to their base.

Existing tabletop applications provide a variety of interaction components. They use the paradigm of direct manipulation [4] or convey a more generic meaning [9]. Most known approaches use a direct mapping between a single object that is manipulated and a single associated input data value. Some known examples [10] allow for dual hand input and have some specific interactions which specifically require the concurrent use of two pucks. Further, widgets that are able to alter their position or shape [11], and hence can provide haptic feedback, have been disclosed.

Tangible User Interfaces for assessing collaborative problems have only been marginally investigated in the prior art. To the best of the applicant's knowledge, none of the disclosed methods for using Tangible User Interfaces provides an efficient metaphor for enabling the collaborative input of data by multiple users in a collaborative way. An example of an application in which such data input is needed may be a collaborative choice application or a collaborative vote among possible data input values.

### Technical problem to be solved

It is an objective of the present invention to provide a method and device for providing data input at a computing device using a tangible human-computer interface, which overcomes or alleviates at least some of the drawbacks of the prior art.

### Summary of the invention

According to a first aspect of the invention, a method for providing data input at a computing device using a tangible human-computer interface is provided. The method comprises the steps of:
- providing a tangible human-computer interface comprising physical support means having a plurality of support portions, processing means, and probing means capable of detecting physical objects on each of said support portions;
- associating a predetermined data value with each one of said support portions;
- probing the presence of any physical objects on any of said support portions, and
- generating the data input and providing it at the computing device.

The step of data input generation comprises associating the physical objects detected on a support portion with the corresponding predetermined data value.

The step of detecting at least one physical object may preferably comprise counting the number of objects detected on any of said support portions. Even more preferably, the step may comprise detecting physical properties of any of the detected objects, said properties comprising, for example, any of the shape, physical dimensions, weight, or color of the objects.

The step of data input generation may preferably comprise associating the number of detected physical objects on a portion and/or their detected physical properties with the corresponding predetermined data value.

The physical support means may preferably comprise a substantially planar surface, and said support portions may preferably be portions of said surface.

The probing means may preferably be optical probing means comprising image sensing means. Alternatively, the probing means may comprise means capable of detecting electromagnetic signals, or metal probing means.

The human-computer interface may further preferably comprise a substantially planar surface, wherein the probing means are arranged so that they are capable of detecting the presence of said physical support means and/or physical objects on said surface.

Said surface of the human-computer interface may preferably comprise the physical support means.

Further, the human-computing interface may preferably comprise feedback means. The feedback means may comprise visual feedback means provided by display means or projection means. The feedback means may further comprise audio feedback means or haptic feedback means. The feedback means may be operatively connected to the processing means.

The method may advantageously further comprise the step of providing feedback, wherein the feedback indicates the location of the support portions and/or the predetermined data values associated with said support portions.

The method may further preferably comprise the step of providing a feedback that is generated upon provision of said data input at said computing device.

The substantially planar surface of the human-computer interface may preferably be at least partially translucent. The probing means may preferably comprise image sensing means and optical means, and may further preferably be provided underneath said surface and comprise a field of view in which they are capable of detecting objects. The field of view may be directed towards said surface and said portions of the physical support means may be at least partially translucent, so that said probing means are capable of detecting a physical object on said portion from underneath, when the physical support means are placed on top of said surface.

The probing means may further preferably be configured for detecting physical properties of said objects.

More preferably, the probing means may further be configured for detecting the relative positions of objects that are detected on any given surface portion with respect to each other. The step of generating data input may comprise associating the detected objects with the corresponding predetermined data value depending on their detected relative positions.

Advantageously, the step of generating the input data may comprise the computation of a weighted average of the predetermined values, wherein the weights correspond to the number of physical objects detected on the support portions corresponding to said values. Further, the weights may preferably depend on the properties, physical or other, of the objects detected on the support portions corresponding to the predetermined values. According to another aspect of the invention, a device for carrying out the method according to the invention is provided. The device comprises a tangible human-computer interface, a memory element, and processing means, wherein the human-computer interface comprises physical support means having a plurality of support portions and probing means capable of detecting physical objects on each of said support portions. The processing means are configured to:
- associate a predetermined data value, stored in said memory element, with each one of said support portions;
- probing, using said probing means, the presence of any physical objects on any of said support portions, and
- generate data input and store it in said memory element, wherein the generation of the data input comprises associating the physical objects detected on a support portion with the corresponding predetermined data value.

According to a further aspect of the invention, a computer capable of carrying out the method according to the invention is provided.

According to yet another aspect of the invention, a computer program is provided. The computer program comprises computer readable code, which when run on a computer, causes the computer to carry out the method according to the invention.

According to a further aspect of the invention, a computer program product comprising a computer-readable medium is provided. The computer program according to the invention is stored on the computer-readable medium.

The invention relates to Tangible User Interfaces and provides an efficient metaphor for enabling the collaborative input of data by multiple users. An example of an application in which the invention finds its use may be a collaborative choice application or a collaborative vote among possible data input values.

If the method is used by a single user, the user may provide multi-dimensional input data value in a natural way. For example, the user of a computing device may be confronted with a request from a software application that is executed on the device, for providing a combination of three predetermined color component values (Red, Green, and Blue). Using the invention, he may place objects onto three surface portions of the human-computer interface that represent the three options. The method of the invention allows to weight the Red, Green, and Blue components that are chosen and to provide the resulting combination as input to the software application. This may for example be achieved either by considering the number of objects he puts on the respective surface portions, or for example by measuring their physical weight, or other physical properties. A visual feedback channel may be provided in such an application, wherein the resulting color mix is visualized instantly to the user. The user may in return modify the position of the objects to change the data input.

If the method is used by multiple users, collaborative choice or voting applications are enabled. For example, each one of a plurality of users of a software application that is executed on a computing device may use objects of a specific color and put them onto support portions representing predetermined data values. The overall number of objects detected as a consequence on the support portions may for example lead to the overall voting result, based on majority or weighted voting. The contribution of each user's input to the overall result may further be used as input by also taking the color of the detected objects on each support portion into account. Each user can manipulate their respective objects independently and concurrently with each other user. Specifically, each user may modify their contribution as they wish, i.e., incrementally by adding/removing a single object from the corresponding surface portion, or by adding/removing a plurality of objects at the same time. The interaction with the computing device is, therefore, enriched and rendered more natural by the present invention. The data input contribution provided by each user remains persistent through the use of physical objects. The position of the physical objects on the support means indicates the current data input contributions of each user at any time instant.

The method and device according to the invention enable collaborative data input and data manipulation at a computing device, which have not been achieved using known human-computer interfaces. The underlying principle of the claimed invention may find application in many specific data input situations, mainly wherein collaborative input by multiple users is required.

### Brief description of the drawings

Several embodiments of the present invention are illustrated by way of figures, which do not limit the scope of the invention, wherein:
- Figure 1 if a flow diagram illustrating the main method steps according to a preferred embodiment of the method according to the invention;
- Figure 2 is a schematic illustration of a preferred embodiment of a device for implementing the method according to the invention;
- Figure 3 is a schematic illustration of a preferred embodiment of a device for implementing the method according to the invention;
- Figure 4 is a schematic illustration of a detail of a preferred embodiment of a device for implementing the method according to the invention;
- Figure 5 is a schematic illustration of a detail of a preferred embodiment of a device for implementing the method according to the invention in a lateral cut view;
- Figures 6a, 6b and 6c are top views of a detail of a device for implementing the method according to the invention, according to three preferred embodiments.

### Detailed description of the invention

This section describes the invention in further detail based on preferred embodiments and on the figures, without limiting the scope of the invention to the disclosed examples.

Throughout the description, similar reference numbers will be used to indicate similar concepts across different embodiments of the invention. For example, references 100, 200, 300, 400 each indicate a tangible Human-Computer Interface as required by the invention, in four different embodiments. The described embodiments are provided as examples only. It should be understood that features disclosed for a specific embodiment may be combined with the features of other embodiments, unless the contrary is specifically stated.

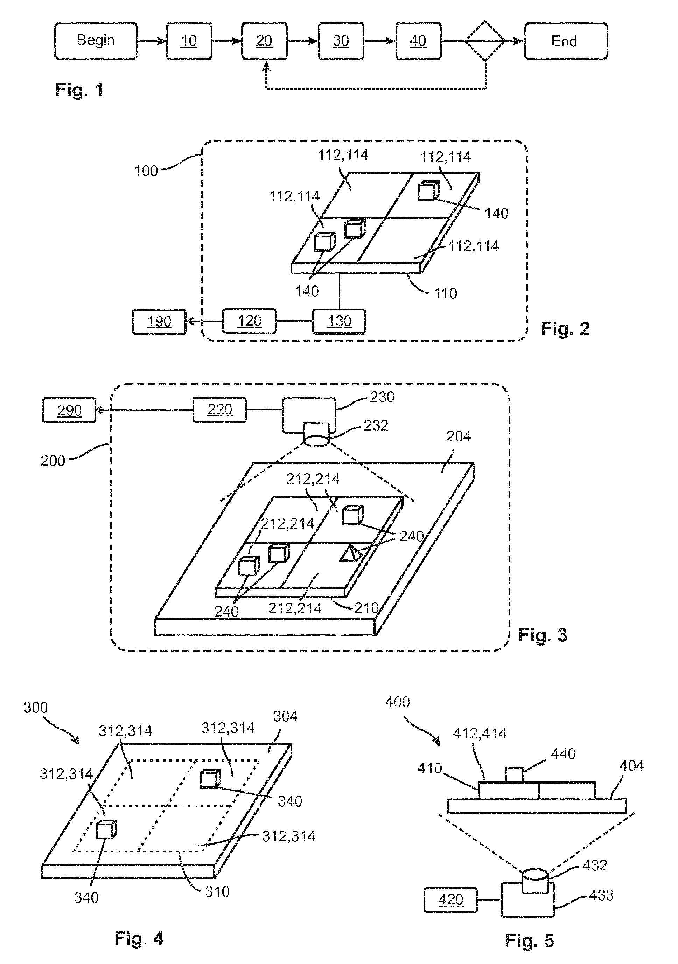

Figure 1 shows the main steps of the method according to the invention in a preferred embodiment. Figure 2 illustrates elements of a device for implementing the method according to the invention. In a first step 10 a human-computer interface 100, specifically a Tangible User Interface, TUI, is provided. The TUI allows one or more users to provide input to a computing device 190, for which it acts as the interface. The interface comprises probing means 130 capable of detecting physical objects 140 on portions 112 of a physical support means 110. The physical support means may be a table top or a physical TUI widget placed upon a table top, or it may have any geometrical shape that allows it to support a physical object 140 detectable by said probing means. The probing means 130 are operatively connected to processing means 120 such as a central processing unit, CPU. The processing means 120 have read/write access to a non-illustrated memory element.

In a second step 20, a predetermined data value 114 is associated with each one of said support portions 112. In a scenario in which an application that is executed by the computing device 190 prompts a user for an answer, each value 114 may for example represent a possible answer to the question. The mapping between support portions 112 and predetermined data values 114 is stored in the memory element to which the processing means 120 have read access.

In a subsequent step 30, the presence of physical objects 140 on any of said support portions 112 is probed by said probing means 130. In a final step 40, data input 102 is generated and provided to the computing device 190. The generation of the data input comprises associating the physical objects 140 detected on a support portion 112 with the corresponding predetermined data value 114. This enables for example the selection of one of a plurality of predetermined answers to a question, or to weigh each of the predetermined values according to the number of detected objects on the corresponding support portion. The data input may for example be a weighted average of the predetermined values 114, wherein the weights are given as a function of the number of objects detected on the corresponding support portions. For specific applications, other useful combinations of the predetermined data values based on the detected presence of physical objects on the corresponding support portions will be applicable by the skilled person, without leaving the scope of the present invention.

As shown by the dashed lines on Figure 1, the method may be conditionally repeated by updating the predetermined data values in step 20, preferably based on the provided input in the earlier instance of the method.

Figure 3 shows a further embodiment of the device according to the invention, wherein the human-computer interface 200 comprises a substantially planar surface 204, on which the physical support means 210 having the support portions 212 are placed. The planar surface 204 may for example be a table-top whereas the support means 210 are a physical TUI widget delimiting the regions corresponding to portions 212. A user may manipulate objects 240 on any one of the support portions 212, before passing the widget on to a different user, who in turn manipulates the objects on any of the support portions, whereby the two or more users collaboratively contribute to the data input. Probing means 230 are arranged so that they are capable of detecting the presence of the support means 210 as well as objects on the planar surface. The probing means may for example comprise optical probing means 232 such as image sensing means or image depth sensing means coupled to appropriate focusing lenses. The image sensing means may be provided by means of a charge-coupled-device array, while depth sensing means may be provided by means of a time-of-flight camera. The field of view of such probing means, indicated by dashed lines on Figure 3, is in that case oriented so as to cover at least the part of the surface 204 onto which the support means 210 may be placed. Using the processing means 220, the detection of objects 240 based on the data provided by such probing means 230 is readily achieved. Image segmentation and object detection algorithms useful to that end are as such known in the art and will not be explained in further detail within the context of the present invention.

Figure 4 illustrates another embodiment according to which the planar surface 304 comprises the physical support means 310 having the support portions 312. The planar surface may for example be a surface on which visual feedback is provided using feedback means operatively coupled to the processing means. Specifically, the surface may comprise a display device, which indicates the regions corresponding to the surface portions 312 to a user. The visual feedback may alternatively be provided using display projection means. In other embodiments, the location of the surface portions 312 may be indicated by haptic feedback means.

The feedback means may also be used to provide feedback on the generated input to one or more users who have provided the objects based on which the input has been generated. Such feedback may comprise optical feedback, haptic feedback, audio feedback, or any combinations thereof. By moving one or more objects from one surface portion 312 to another, the impact on the generated data input is in that case immediately appreciable by the user. The feedback may also comprise updating the predetermined values 314 associated to the support portions 312 as a function of the generated input data.

Figure 5 schematically illustrates a lateral cut view of a further preferred embodiment of a device according to the invention. In this embodiment, the probing means 433 are arranged underneath the surface 404 on which the support means 410 are placed. In case the probing means 433 comprise optical probing means as described above, both the surface 404 and the regions of the support means corresponding to the support portion 412 are made of a material that is at least partially translucent. This is to make sure that an object 440 supported by the support means 410 is not occluded from the field of view of the probing means by either the support means 410 or the surface 404. The probing means 433 may for example be optical scanning means.

In all embodiments, detection of a support portion and of the presence of one or several objects on a support portion may be achieved by several techniques as such known in the art. For example, an object to be detected may be tagged with an optical marker or graphical tag easily recognizable by the optical probing means. The tag may be a simple high-contrast dot, or a combination of black and white squares.. The tags should be arranged on the objects so that they are within the field of view of and capable of being detected by the probing means. In the embodiment shown in Figure 3, the tag should be arranged on a side of an object 240 which is opposed to the side facing the support portion 212. Conversely, in the embodiment shown in Figure 5, the tag should be on the bottom side of the object 440, which corresponds to the side that contacts the support portion 412. The tags, if they uniquely identify each object, may also be used by the processing means to identify the objects placed on the support portions.

The tags may alternatively emit electromagnetic signals, which are detectable by the appropriately chosen probing means. Other tagging means are known in the art and applicable to the invention. Their specific description would, however, extend beyond the description of the invention as such.

During the data input generation step, the identity of each detected object on a detected support portion may lead to an identity-specific association of the object with the corresponding predetermined data value. For example, if multiple users provide objects on the support means, all objects of a particular user may be tagged using the same tag, while each user is attributed a distinct tag. The contribution of each user to the generated input value may then be straightforwardly tracked by the processing means.

A similar function may be achieved by using objects having different physical properties, such as size, shape, color or others, provided that the probing means used to detect the presence and identity of the objects are capable of probing such physical properties. Such probing means are well known in the art and are within the reach of the skilled person.

In yet another embodiment, the probing means are capable of identifying the relative positions of a plurality of objects on any of the support portions. The relative position of a plurality of objects may be used as described above to weigh the importance of the associated predetermined value during the step of generating the data input. Specifically, physical clustering of objects may be interpreted by the processing means as providing more weight to a given value.

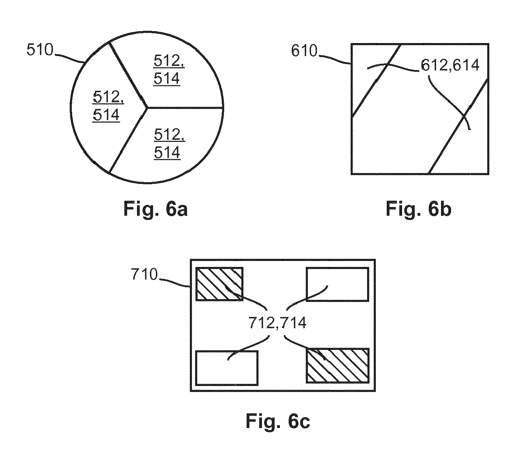

Figures 6a, 6b and 6c provide exemplary embodiments of physical support means for supporting objects as required by the invention. These configurations are applicable to any embodiments described above. In Figure 6a, the physical support means 510 have a circular shape, wherein the portions 512 thereof, with which the predetermined values 514 are associated, are equiangular sectors of the circular shape. In Figure 6b, the support portions 612 with which the predetermined values 614 are associated do not provide an integral partition of the support means 610. In Figure 6c, the support means 710 comprise two disjoint support portions indicated by hatched rectangular features, which are associated with a first predetermined value. Two further disjoint support portions indicated by white rectangular features are associated with a second predetermined value, which is distinct from the first predetermined value.

The skilled person will be able to provide a computer program implementing some or all of the method steps according to the invention based on the provided description and the accompanying drawings. Such a computer program, when run on a computer, will lead the computer to execute the described method steps.

It should be understood that the detailed description of specific preferred embodiments is given by way of illustration only, since various changes and modifications within the scope of the invention will be apparent to the skilled man. The scope of protection is defined by the following set of claims.

### References

1. "Metaphor Awareness and Vocabulary Retention", F. Boers, Applied Linguistics 21/4: 553-571, Oxford University Press 2000.
2. "Understanding the characteristics of metaphors in tangible user interfaces", V. Maquil, E. Ras and O. Zephir, Mensch & Computer Workshopband, 47-52, 2011.
3. "A taxonomy for and analysis of tangible interfaces", K. P. Fishkin, Pers. Ubiquit. Comput. (2004) 8: 347-358.
4. "Urp: A Luminous-Tangible Workbench for Urban Planning and Design", J. Underkoffler and H. Ishii, CHI 99, 15-20 May 1999, 386-393.
5. "The Tangible User Interface and its Evolution", H. Ishii, Comm. Of the ACM, June 2008/Vol. 51, No. 6, 32-36.
6. "Illuminating Clay: A 3-D Tangible Interface for Landscape Analysis", B. Piper, C. Ratti and H. Ishii, CHI 2002, 20-25 April 2002, 355-362.
7. "The reacTable: Exploring the Synergy between Live Music Performance and Tabletop Tangible Interfaces", S. Jordà, G. Geiger, M. Alonso and M. Kaltenbrunner, TEI'07, 15-17 Feb 2007, Baton Rouge, LA, USA, 139-146.
8. "reacTIVision: A Computer-Vision Framework for Table-Based Tangible Interaction", M. Kaltenbrunner and R. Bencina, TEI'07, 15-17 Feb 2007, Baton Rouge, LA, USA, 69-74.
9. "Augmenting Interactive Tabletops with Translucent Tangible Controls", M. Weiss, J.D. Hollan and J. Borchers, Tabletops - Horizontal Interactive Displays, Human-Computer Interaction Series, 149-170, Springer-Verlag 2010.
10. "Audiopad: A Tag-based Interface for Musical Performance", J. Patten, B. Recht and H. Ishii, NIME'02, Proceedings of the 2002 conference on New interfaces for musical expression, 2002.
11. "Tangible Bots: Interaction with Active Tangibles in Tabletop Interfaces", E. W. Pederson and K. Hornbaek, CHI 2011, May 7-12 2011, Vancouver BC, Canada.

## Claims

1. A method for providing data input (102, 202, 302, 402) at a computing device (190, 290, 390, 490) using a tangible human-computer interface (100, 200, 300, 400), wherein the method comprises the steps of:
- providing a tangible human-computer interface (100, 200, 300, 400) comprising physical support means (110, 210, 310, 410) having a plurality of support portions (112, 212, 312, 413), processing means (120, 220, 320, 420), and probing means (130, 230, 330, 430) capable of detecting physical objects (140, 240, 340, 440) on each of said support portions; (10)
- associating a predetermined data value (114, 214, 314, 414) with each one of said support portions (112, 212, 312, 412); (20)
- probing the presence of any physical objects (140, 240, 340, 440) on any of said support portions (112, 212, 312, 412); (30) and
- generating the data input (102, 202, 302, 402) and providing it at the computing device,
wherein the generation of the data input comprises associating the physical objects (140, 240, 340, 440) detected on a support portion (112, 212, 312, 412) with the corresponding predetermined data value (114, 214, 314, 414) (40).

2. The method according to claim 1, wherein the physical support means (110) comprise a substantially planar surface, and wherein said support portions (112) are portions of said surface.

3. The method according to any of claims 1 or 2, wherein the human-computer interface (200) comprises a substantially planar surface (204), wherein probing means (230) are arranged so that they are capable of detecting the presence of said physical support means (210) and/or physical objects (240) on said surface (204).

4. The method according to claim 3, wherein said surface of the human-computer interface (300) comprises said physical support means (310).

5. The method according to any of claims 1 to 4, wherein the human-computing interface further comprises feedback means.

6. The method according to claims 4 and 5, wherein the method comprises the further step of providing feedback, wherein the feedback indicates the location of the support portions and/or the predetermined data values associated with said support portions.

7. The method according to any of claims 5 or 6, wherein the method further comprises the step of providing a feedback that is generated upon provision of said data input at said computing device.

8. The method according to claim 3, wherein the substantially planar surface (404) of the human-computer interface (400) is at least partially translucent,
wherein said probing means (432) comprise image sensing means and optical means, which are provided underneath said surface (404), and which comprise a field of view in which they are capable of detecting objects, the field of view being directed towards said surface,
and further wherein said portions (412) of the physical support means (410) are at least partially translucent,
so that said probing means (430) are capable of detecting a physical object (440) on said portion (412) from underneath, when the physical support means (410) are placed on top of said surface (404).

9. The method according to any of claims 1 to 8, wherein said probing means are further configured for detecting physical properties of said objects.

10. The method according to any of claims 1 to 9, wherein said probing means are further configured for detecting the relative positions of objects that are detected on any given surface portion with respect to each other, and wherein the step of generating data input comprises associating the detected objects with the corresponding predetermined data value depending on their detected relative positions.

11. The method according to any of claims 1 to 10, wherein said step of generating the input data comprises the computation of a weighted average of the predetermined values, wherein the weights correspond to the number of physical objects detected on the support portions corresponding to said values.

12. A device for carrying out the method according to any of claims 1 to 11, the device comprising a tangible human-computer interface, a memory element, and processing means, wherein the human-computer interface comprises physical support means having a plurality of support portions and probing means capable of detecting physical objects on each of said support portions, and wherein the processing means are configured to
- associate a predetermined data value, stored in said memory element, with each one of said support portions;
- probe, using said probing means, the presence of any physical objects on any of said support portions, and
- generate data input and store it in said memory element, wherein the generation of the data input comprises associating the physical objects detected on a support portion with the corresponding predetermined data value.

13. A computer capable of carrying out the method according to any of claims 1 to 11.

14. A computer program comprising computer readable code means, which when run on a computer, causes the computer to carry out the method according to any of claims 1 to 11.

15. A computer program product comprising a computer-readable medium on which the computer program according to claim 14 is stored.
